# EUROPÄISCHE PATENTSCHRIFT

(11) **EP 0 482 405 B1**
(45) Veröffentlichungstag und Bekanntmachung des Hinweises auf die Patenterteilung: **28.12.1994**
(21) Anmeldenummer: 91116981.1
(22) Anmeldetag: 04.10.1991
(51) Int. Cl.: E02D 31/00, E21D 9/06

(54) **Verfahren zum nachträglichen Herstellen einer unterirdischen Dichtungssohle unter einer bestehenden Mülldeponie**
Method for secondary construction of an underground sealing-base under a consisting dump
Méthode pour la fabrication supplémentaire d'une base d'étanchéité sous un dépôt de déchets

(30) Priorität: 26.10.1990 DE 4034180
(43) Veröffentlichungstag der Anmeldung: 29.04.1992
(73) Patentinhaber: Alfred Kunz GmbH & Co., D-80336 München (DE)
(72) Erfinder: Hausner, Siegfried, Dipl.-Ing., W-8000 München 71 (DE); Hertle, Edmund, Dipl.-Ing., W-8033 Planegg (DE)
(74) Vertreter: Gossel, Hans K., Dipl.-Ing.

(56) Entgegenhaltungen:
- DE-A- 3 122 891
- DE-B- 1 658 773
- DE-C- 3 409 591
- US-A- 4 537 536

## Beschreibung

Die Erfindung betrifft ein Verfahren zum nachträglichen Herstellen einer unterirdischen Dichtungssohle unter einer bestehenden Mülldeponie oder kontaminierten Fläche, bei dem ausgehend von einer Seite der Mülldeponie parallel zueinander verlaufende Tunnel mit einem Vortriebsschild unter der Mülldeponie vorgetrieben werden, wobei nebeneinander liegende Tunnelröhren einander überschneiden.

Bei einem aus der DE-C-34 09 591 bekannten Verfahren dieser Art werden sich überschneidende Bohrlöcher gebohrt und gleichzeitig wird zur Abstützung des darüber befindlichen Erdbodens fortlaufend mit der Herstellung der Bohrlöcher in diese eine Verrohrung eingeschoben, durch welche hindurch vor der Verrohrung ausgebrochenes Bodenmaterial herausgefördert wird, und anschließend wird die Verrohrung durch Eindrücken von im wesentlichen flüssigkeitsdichtem Füllmaterial gefüllt und die Verrohrung wird aus den Bohrlöchern entfernt. Die nach diesem bekannten Verfahren hergestellte Untergrundabdichtung ist jedoch nur dann völlig dicht, wenn das mit dem Ziehen der Rohre eingepreßte Füllmaterial ausreichende Dichtigkeit gewährleistet. An nachträglich unter Deponien oder kontaminierte Flächen eingebaute Untergrundabdichtungen wird zunehmend die Forderung gestellt, daß deren Dichtigkeit auch nach der Erstellung ständig geprüft werden kann.

Aufgabe der Erfindung ist es daher, ein Verfahren der eingangs angegebenen Art zu schaffen, nach dem sich eine Untergrundabdichtung herstellen läßt, die auch nach ihrer Erstellung noch auf Dichtigkeit geprüft und ggf. repariert werden kann.

Erfindungsgemäß wird diese Aufgabe bei einem Verfahren der gattungsgemäßen Art dadurch gelöst, daß innerhalb des ringförmigen Schildschwanzes beim Schildvortrieb ein Rohr mitgeführt und der Ringraum zwischen dem ringförmigen Schildmantel und dem Rohr mit einer mineralischen Dichtmasse verfüllt wird.

Aus DE-A-3122981 ist ein Verfahren zum Vortrieb eines Tunnels, Stollens oder eines sonstigen unterirdirschen Bauwerks unter Einsatz eines Vortriebs- oder Messerschildes bekannt, bei dem im Schutze des Schildschwanzes oder eines Nachlaufschildes die Ortbetonauskleidung dadurch erstellt wird, daß in den stirnseitig von einer Stirnschalung verschlossenen Schalungsraum Beton gepumpt wird, wobei der Schildschwanz die Außenschalung bilden kann und eine zylindrische Innenschalung vorgesehen ist.

Die nach dem erfindungsgemäßen Verfahren hergestellte Untergrundabdichtung besteht somit aus einander überschneidenden rohrförmigen Mänteln, die ein inneres Rohr einfassen, das zumindest zunächst unverfüllt ist und daher durchgängig ist. Dieses mittlere Rohr gestattet es daher, nach der Herstellung der Untergrundabdichtung deren Dichtigkeit durch Begehen oder auch durch Prüfgeräte zu überprüfen.

Untergrundabdichtungen werden grundsätzlich nur unter Mülldeponien und anderen Altlasten ausgeführt, die in hohem Maße die Biosphäre und insbesondere das Grundwasser gefährden. Aufgrund der Einwirkung der toxischen Stoffe der Altlast bis in große Tiefen des Untergrundes kommt dem Schutz des mit der Herstellung der Untergrundabdichtung befaßten Personals besondere Bedeutung zu, da die Herstellung der Dichtsohlen häufig innerhalb eines erheblich kontaminierten Erdreiches erfolgen muß. Das erfindungsgemäße Verfahren läßt sich nun in besonders sicherer Weise durchführen, wobei Kontakte des Arbeitspersonals mit dem zu durchörternden Bodenmaterial weitgehend vermieden werden kann. Die nach dem erfindungsgemäßen Verfahren hergestellte Dichtsohle ist darüber hinaus auf lange Dauer beständig.

Zur Verdichtung der eingebrachten mineralischen Dichtmassen können sich die hydraulischen Vorschubpressen des Schildes auf einer den Ringraum abschließenden ringförmigen Schalung abstützen. Der Druck zum Vorschieben des Vortriebsschildes wird somit in günstiger Weise zugleich zur Verdichtung der eingebrachten mineralischen Dichtmassen benutzt.

Die eingebrachten mineralischen Dichtmassen füllen zum umgebenden Boden hin das Ausbruchsprofil völlig aus und stützen das durchörterte Erdreich. Von innen wird die eingepreßte Tunnelauskleidung durch das mitgeführte Rohr bzw. den mitgeführten Rohrquerschnitt gestützt. Der Zugang zu dem Vortriebsschild bleibt durch den mitgeführten Rohrquerschnitt frei, durch den die Versorgung zu dem Vortriebsschild sichergestellt ist.

Das stützende Rohr kann entsprechend dem Fortschritt des Schildvortriebes vorgebaut werden. Um diesen Vorbau zu ermöglichen, kann das innere Stützrohr aus ringförmigen Segmenten aufgebaut sein, die im Schutze des Schildschwanzes des Vortriebsschildes zu einem das innere Stützrohr verlängernden Rohrabschnitt zusammengefügt werden.

Nach einer anderen Ausführungsform des erfindungsgemäßen Verfahrens kann das Rohr in Form eines Rohrabschnitts mit dem Schild vorgezogen werden, wobei zumindest der innere Bereich der Tunnelauskleidung aus steifem Material, beispielsweise Beton oder Stahlbeton, ausgeführt wird, um die notwendige Stützfestigkeit für die Tunnelauskleidung und den auf diese wirkenden Erddruck zu haben. In diesem Falle bildet der Rohrabschnitt eine wandernde Schalung.

Zweckmäßigerweise werden zunächst mindestens zwei im Abstand voneinander verlaufende, mit dichtenden Auskleidungen versehene Tunnel errichtet und anschließend wird zwischen zwei Tunneln ein Tunnel vorgetrieben, der die beiden zuvor errichteten Tunnel anschneidet. Bei dieser Ausführungsform wird der Vortriebsschild beim Vortrieb symmetrisch belastet, so daß dessen Steuerung vereinfacht und dessen Richtungshaltigkeit verbessert wird.

Nach einer besonders vorteilhaften Ausführungsform ist vorgesehen, daß die Wandungen zweier einander überschneidender Tunnelauskleidungen einschl. der inneren Rohre mit einem durchgehenden Schlitz angeschnitten und in den Schlitz eine dichtende Bahn ein gezogen wird, dessen seitlichen Bereiche mit den inneren Rohren verbunden werden. Der Schlitz kann durch schrämende oder fräsende Werkzeuge ausgeführt werden, wobei ein schwertförmiges Werkzeug verwendet werden kann, an dessen Schwanz die einzuziehende Folie angehängt wird.

Darüber hinaus besteht auch die Möglichkeit, die zusätzlich dichtende Bahn in den Schlitz parallel zu den Rohren einzuziehen, wobei dann die Seitenränder der in dem Schlitz liegenden Bahnabschnitte dichtend miteinander verbunden werden müssen. Dies kann durch entsprechend profilierte Schloßführungen geschehen, die bekannt sind.

In weiterer Ausgestaltung der Erfindung ist vorgesehen, daß die Rohre durch radiale Rohre oder Filterlanzen mit dem darüber liegenden Erdbereich verbunden werden. Durch diese Rohre oder Filterlanzen kann Wasser aus dem darüber liegenden Erdreich in die Rohre fließen, das dann aus diesen in geeigneter Weise abgezogen werden kann. Die Rohre oder Filterlanzen ermöglichen somit eine Durchspülung der Deponie und des kontaminierten Erdreichs, was dann zu einer allmählichen Entgiftung führt.

Weiterhin läßt sich durch die Rohre oder Filterlanzen in der durch umgebende Wände dicht eingeschlossenen Deponie der Grundwasserspiegel absenken, so daß der hydrostatische Druck in dem gekapselten Deponiebereich geringer ist. Es entsteht somit ein Druckgradient von dem umgebenden Erdreich nach innen, was zusätzlich die Dichtigkeit und die Beanspruchung der Sohlabdichtung verringert. Die Dichtigkeit kann dadurch erheblich gesteigert werden.

Ist nach einer Überprüfung festgestellt worden, daß die nach dem erfindungsgemäßen Verfahren erstellte Untergrundabdichtung dicht ist, können sämtliche oder einzelne Rohre vorzugsweise mit dichtendem Material verfüllt werden.

Zweckmäßig ist es natürlich, zumindest einzelne Rohre unverfüllt zu lassen, so daß die Untergrundabdichtung ständig durch Begehen oder evtl. auch durch Roboter überprüft werden kann.

Zweckmäßigerweise beträgt die Höhe der einander überschneidenden Auskleidungen oder Kreisquerschnitte mindestens etwa 1,5 m.

Zur Durchführung des erfindungsgemäßen Verfahrens kann ein Vortriebsschild verwendet werden, der einen diesen einfassenden Stahlmantel aufweist, der durch eine Querwand in einen Abbauraum und in einen Arbeitsraum unterteilt ist. Der Vortriebsschild ermöglicht einen vollmechanisierten Schildvortrieb, wobei die Ausbruch- und Fördereinrichtungen den jeweiligen geologischen Gegebenheiten in einem Höchstmaß angepaßt werden können. Je nach Geologie und Hydrologie werden Teilschnittmaschinen oder Vollschnittmaschinen eingesetzt, wobei die Ortsbrust suspensions- oder erdbreigestützt sein kann.

Die Abbaukammer des Vortriebsschildes ist durch eine abschottende Druckwand von dem Arbeitsraum des Vortriebsschildes getrennt, so daß in dem Arbeitsraum atmosphärische Bedingungen herrschen können. In dem Abbauraum entstehende hydrostatische Überdrücke oder Gasaustritte lassen sich in einfacher Weise beherrschen.

Ausgehend von dem Vortriebsschild läßt sich die im Querschnitt ringförmige mineralische plastische Auskleidung der vorgetriebenen Tunnel im Extrudierverfahren einbringen und anschließend durch Vorpressen des Schildes verdichten.

Die Innenverschalung besteht aus einem Rohr aus Stahl und/oder Kunststoff. Der Ausbruch kann durch übliche Spülförderung in geschlossenen Leitungen ausgetragen werden, die in dem mitgeführten Rohrquerschnitt verlegt werden.

Die Innenrohre bestehen zweckmäßigerweise aus HDPE-Kunststoff, der auch gegen aggressive Wässer beständig ist.

Ein Ausführungsbeispiel der Erfindung wird nachstehend anhand der Zeichnung näher erläutert. In dieser zeigt
- Fig. 1: einen Querschnitt durch eine aus einander überschneidenden Rohrmänteln aus mineralischer Dichtungsmasse bestehende Untergrundabdichtung,
- Fig. 2: einen Querschnitt durch eine der Fig. 1 entsprechende Untergrundabdichtung mit unverfüllten Rohrquerschnitten und mit in den Überschneidungsbereichen der Rohrmäntel eingezogenen dichtenden Folien, die mit den Innenrohren verschweißt oder verbunden sind,
- Fig. 3: einen vergrößerten Ausschnitt aus Fig. 2, der die Art der Verbindung der eingezogenen dichtenden Folien mit einem Innenrohr zeigt, und
- Fig. 4: einen Schnitt durch einen Vortriebsschild während des Einbaus eines Rohrmantels in schematischer Darstellung.

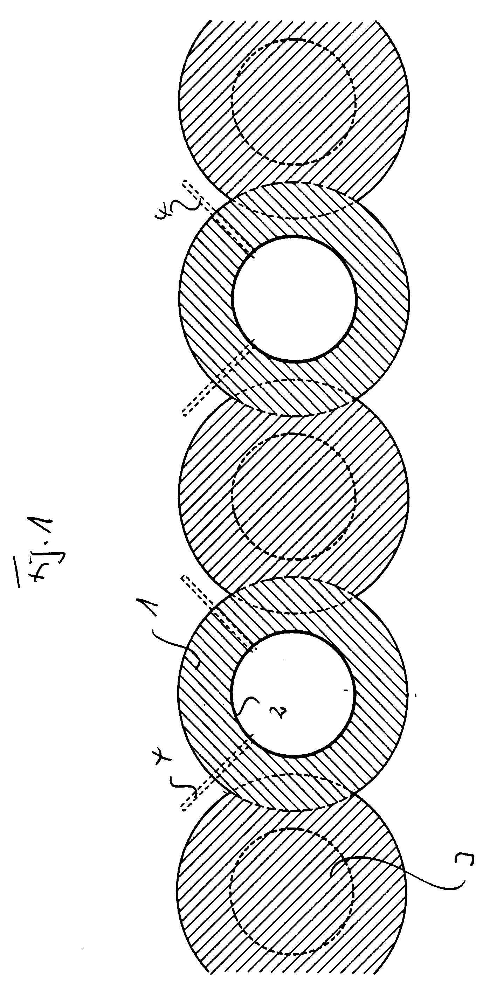

Aus Fig. 1 ist eine nach dem erfindungsgemäßen Verfahren erstellte Untergrundabdichtung ersichtlich, und zwar ein senkrechter Querschnitt durch die einander teilweise überschneidenden Rohrmäntel.

Die Untergrundabdichtung besteht aus einzelnen Rohrmänteln 1 aus verdichteten mineralischen Dichtmassen, bei denen es sich beispielsweise um Tone, mit Bantonit angereicherte Sande und Materialien mit Zusätzen auf Mörtel- und Kunststoffbasis handeln kann. Als geeignete Dichtmassen können auch Mischungen mit Bindemitteln und Zement und bituminöse Mischungen verwendet werden.

Die Tunnelauskleidungen 1 sind nach innen hin durch ein Stützrohr 2 abgestützt.

Um eine durchgehende Sohlabdichtung zu erhalten, überschneiden sich die Tunnelauskleidungen in der dargestellten Weise. Die Höhe der Überschneidungen zwischen den oberen und unteren Schnittlinien der äußeren Mäntel der Tunnelauskleidungen soll mindestens etwa 1,5 m betragen.

Der Innenrohrdurchmesser sollte mindestens etwa 1,40 m betragen, um den Durchgang und den Materialtransport zu ermöglichen.

Der Außendurchmesser der rohrförmigen Auskleidungen soll entsprechend dem Durchmesser des Vortriebsschildes mindestens etwa 2,80 m betragen.

Bei dem Ausführungsbeispiel nach Fig. 1 ist jedes zweite innere Rohr mit einer Dichtungsmasse 3 verfüllt, so daß nur jedes zweite Rohr durchgängig bleibt.

Die erhaltenen Innenrohre 2 sind durch Sickerlanzen 4, die den Rohrmantel sowie die Auskleidung durchsetzen, mit dem darüber befindlichen Erdreich verbunden. Über diese Sickerlanzen 4 läßt sich der Grundwasserspiegel innerhalb der eingekapselten Deponie absenken.

Die Innenrohre können aus kunststoffbeschichteten Stahlrohren oder aber auch aus Rohren aus HDPE-Kunststoff bestehen.

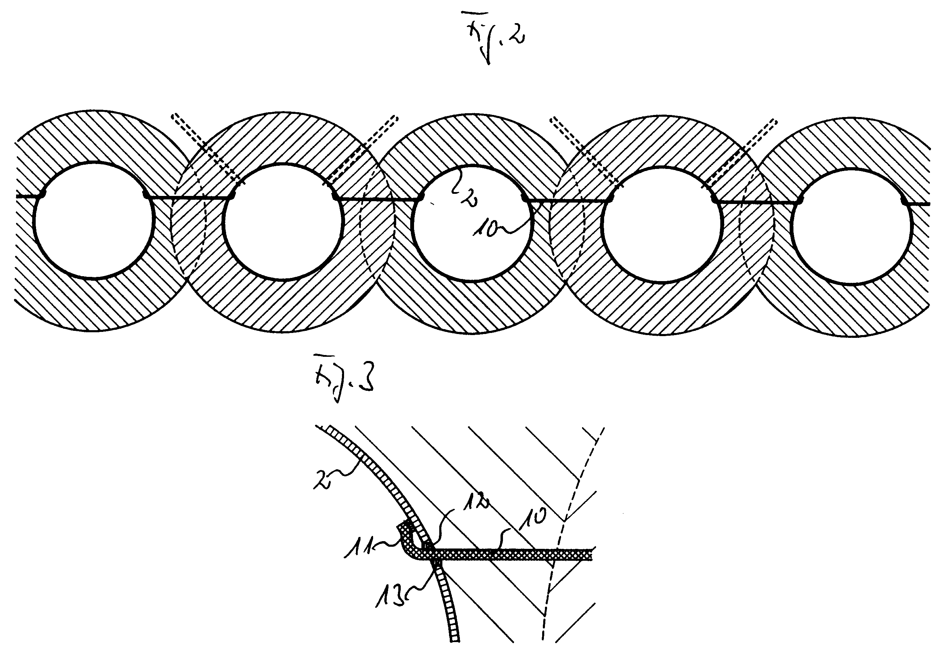

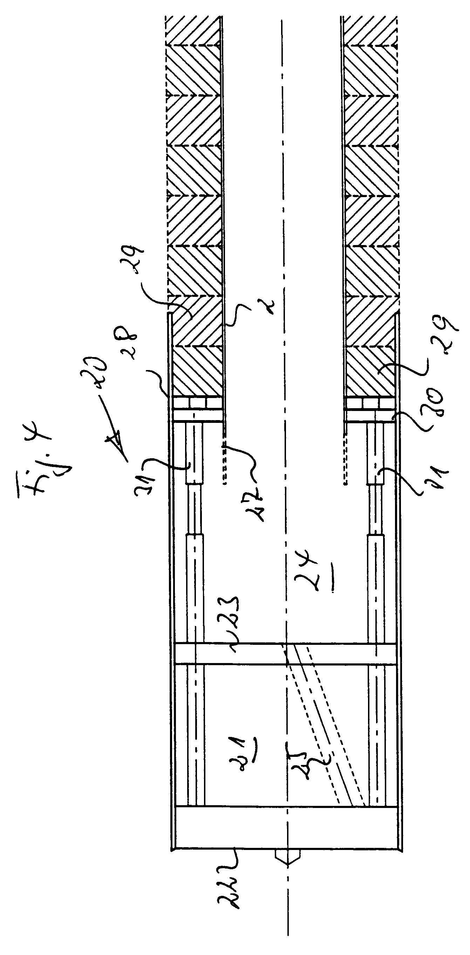

Bei dem Ausführungsbeispiel nach Fig. 2 sind die einander überlappenden Mäntel der rohrförmigen Auskleidungen durch Längsschlitze aufgetrennt und in diese Längsschlitze sind dichtende Folien 10 aus Kunststoff oder anderem geeigneten Material eingezogen, deren Ränder in den Innenraum der Rohre 2 ragen. Die Ränder 11 der eingezogenen Folien 10 sind in der aus Fig. 3 ersichtlichen Weise mit den Innenwandungen der Rohre 2 verbunden oder verschweißt. Weiterhin sind auch die Schlitze in den Rohrmänteln 2 durch Schweißnähte 12, 13 geschlossen, die die durch die Schlitze gebildeten Kante der Mäntel mit der eingezogenen Folie 10 verbinden. Auf diese Weise ist eine durchgehende dichtende Barriere aus den Rohren bzw. deren oberen Schalen und den diese verbindenden Folien 10 geschaffen.

Zur Bildung der die einander überschneidenden Auskleidungsringe durchsetzenden Schlitze, in die nachfolgend Dichtungsbahnen aus Kunststoff eingezogen werden, kann ein stählernes Schwert mit einem sägenden oder schrämenden Trennwerkzeug verwendet werden. Da durch die Schlitze auch die Innenrohre 2 aufgeschnitten werden, kann es vorübergehend erforderlich sein, die oberen Rohrschalen abzustützen. Anschließend werden die oberen Rohrschalen in den Verbund wieder dadurch einbezogen, daß sie mit den eingezogenen Folien verschweißt werden. Die aus Fig. 3 ersichtliche Doppelnaht gewährleistet einen besonders dichten Anschluß.

Aus Fig. 4 ist der Vortriebsschild 20 ersichtlich. Der Vortriebsschild 20 besteht aus einem Abbruchraum 21, der zur Ortsbrust hin beispielsweise durch das Schneidrad 22 abgeschlossen ist. Der Abbruchraum 21 ist durch eine abschottende Querwand 23 zu dem Arbeitsraum 24 hin abgeschlossen. Der Arbeitsraum 24 ist mit einer Baugrube durch das Rohr 2 verbunden, das der Versorgung dient. Spülleitungen und Versorgungsleitungen können in diesem Rohr verlegt werden.

Der von dem Schneidrad 22 ausgebrochene Ausbruch wird über einen Förderer 25, beispielsweise einen Schneckenförderer, ausgetragen. Das Ausbruchsmaterial wird zweckmäßigerweise durch eine Spülleitung abgefördert.

Das innere Rohr 2 wird in der durch gestrichelte Linien angedeuteten Weise entsprechend dem Vorschub des Vortriebsschildes 20 um Rohrabschnitte 27 verlängert.

In den durch den Schildschwanz 28 und das Rohr 2 begrenzten Ringraum werden abschnittweise Schichten aus mineralischem Dichtungsmaterial 29 eingebracht. Der zwischen dem Schildschwanz 28 und dem abschnittweise verlängerten inneren Rohr 2 gebildete Ringraum wird zu dem Arbeitsraum 24 hin durch eine ringförmige Schalung 30 abgeschlossen. Beim Einfahren der Vorschubpressen 31 für den Vortriebsschild 20 wird im Extrudierverfahren mineralische Dichtungsmasse zwischen dem letzten Abschnitt 29 und die ringförmige Schalung 30 eingepreßt, die dann bei dem folgenden Vortriebshub der Vorschubpressen 31 verdichtet wird.

## Patentansprüche

1. Verfahren zum nachträglichen Herstellen einer unterirdischen Dichtungssohle unter einer bestehenden Mülldeponie oder kontaminierten Fläche, bei dem ausgehend von einer Seite der Mülldeponie parallel zueinander verlaufende Tunnel mit einem Vortriebsschild (20) unter der Deponie vorgetrieben werden, wobei nebeneinander liegende Tunnelröhren einander überschneiden, und wobei mittels einer Dichtmasse in den Tunnelröhren die unterirdische Dichtungssohle gebildet wird,
**dadurch gekennzeichnet**,
daß innerhalb des ringförmigen Schildschwanzes (28) beim Schildvortrieb ein Rohr (2) mitgeführt und der Ringraum zwischen dem ringförmigen Schildmantel und dem Rohr (2) mit einer mineralischen Dichtmasse verfüllt wird.

2. Verfahren nach Anspruch 1, dadurch gekennzeichnet, daß sich die hydraulischen Vorschubpressen des Schildes auf einer dem Ringraum abschließenden ringförmigen Schalung abstützen.

3. Verfahren nach Anspruch 1 oder 2, dadurch gekennzeichnet, daß das Rohr entsprechend dem Fortschritt des Schildvortriebes vorgebaut wird.

4. Verfahren nach einem der Ansprüche 1 bis 3, dadurch gekennzeichnet, daß das innere Stützrohr aus Ringsegmenten aufgebaut wird.

5. Verfahren nach einem der Ansprüche 1 bis 4, dadurch gekennzeichnet, daß zunächst mindestens zwei im Abstand voneinander verlaufende und mit dichtenden Auskleidungen versehene Tunnel errichtet werden und daß anschließend zwischen zwei Tunneln ein Tunnel vorgetrieben wird, der die beiden zuvor errichteten Tunnelauskleidungen anschneidet.

6. Verfahren nach einem der Ansprüche 1 bis 5, dadurch gekennzeichnet, daß die Wandungen zweier einander überschneidender Tunnelauskleidungen einschl. der inneren Rohre mit einem durchgehenden Schnitt angeschnitten und in den Schnitt eine dichtende Bahn eingezogen wird, deren seitlichen Bereiche mit den inneren Rohren verbunden werden.

7. Verfahren nach Anspruch 6, dadurch gekennzeichnet, daß die Bahn in den Schlitz parallel zu den Rohren eingezogen wird.

8. Verfahren nach Anspruch 7, dadurch gekennzeichnet, daß die Bahn abschnittweise quer in den Schlitz eingezogen und die Abschnitte an ihren Rändern miteinander verbunden werden.

9. Verfahren nach einem der Ansprüche 1 bis 8, dadurch gekennzeichnet, daß die Rohre durch radiale Rohre oder Filterlanzen mit dem darüberliegenden Bodenbereich verbunden werden.

10. Verfahren nach einem der Ansprüche 1 bis 9, dadurch gekennzeichnet, daß sämtliche oder einzelne Rohre mit dichtenden Materialien verfüllt werden.

11. Verfahren nach einem der Ansprüche 1 bis 10, dadurch gekennzeichnet, daß als innere Stützrohre Rohre aus Stahl, kunststoffbeschichtetem Stahl oder aus HDPE-Kunststoff verwendet werden.

## Claims

1. Method for the retrospective production of an underground sealing base below an existent landfill site or contaminated area, in which tunnels starting from one side of the landfill site and running parallel to one another are driven below the landfill site using a driving shield (20), adjacent tunnel tubes overlapping one another, and the underground sealing base being formed by means of a sealing compound in the tunnel tubes, characterized in that a tube (2) is carried along inside the annular shield tail (28) during shield tunnelling, and the annular space between the annular shield casing and the tube (2) is filled with a mineral sealing compound.

2. Method according to Claim 1, characterized in that the hydraulic advancing presses of the shield are supported on an annular shuttering which terminates the annular space.

3. Method according to Claim 1 or 2, characterized in that the tube is advanced in accordance with the progress of the shield tunnelling.

4. Method according to one of Claims 1 to 3, characterized in that the inner support tube is made up of annular segments.

5. Method according to one of Claims 1 to 4, characterized in that initially at least two tunnels, running spaced apart and provided with sealing linings are erected; and in that a tunnel is subsequently driven between two tunnels, which tunnel cuts into the two tunnel linings previously erected.

6. Method according to one of Claims 1 to 5, characterized in that the walls of two mutually overlapping tunnel linings including the inner tubes are cut into with a continuous cut and a sealing web is drawn into the cut, the lateral regions of which web are connected to the inner tubes.

7. Method according to Claim 6, characterized in that the web is drawn into the slot parallel to the tubes.

8. Method according to Claim 7, characterized in that the web is drawn transversely into the slot in sections, and the sections are connected to one another at their edges.

9. Method according to one of Claims 1 to 8, characterized in that the tubes are connected to the soil region located above them by radial tubes or filter lances.

10. Method according to one of Claims 1 to 9, characterized in that all the tubes or individual tubes are filled with sealing materials.

11. Method according to one of Claims 1 to 10, characterized in that tubes made of steel, plastic-coated steel or of HDPE plastic are used as inner support tubes.

## Revendications

1. Procédé pour la fabrication supplémentaire d'une base d'étanchéité souterraine sous un dépôt de déchets existant ou une surface contaminée dans lequel, en partant d'un côté du dépôt de déchets, on pousse des tunnels s'étendant parallèlement les uns aux autres au moyen d'un bouclier (20) sous le dépôt, et dans lequel des tubes de tunnel avoisinants se recoupent, et dans lequel on constitue au moyen d'une masse d'étanchéité dans les tubes de tunnel la base d'étanchéité souterraine, caractérisé en ce qu'on fait passer à l'intérieur de l'extrémité de bouclier annulaire (28), lors de la poussée du bouclier, un tuyau (2) et que l'espace annulaire entre l'enveloppe de bouclier annulaire et le tuyau (2) est rempli d'une masse d'étanchéité minérale.

2. Procédé selon la revendication 1, caractérisé en ce que les presses hydrauliques d'avance du bouclier prennent appui sur un coffrage annulaire fermant l'espace annulaire.

3. Procédé selon la revendication 1 ou 2, caractérisé en ce que le tuyau est réalisé de façon saillante conformément à l'avance de la poussée de bouclier.

4. Procédé selon l'une des revendications 1 à 3, caractérisé en ce que le tuyau de support interne est réalisé à partir de segments annulaires.

5. Procédé selon l'une des revendications 1 à 4, caractérisé en ce qu'on réalise d'abord au moins deux tunnels s'étendant à une certaine distance l'un de l'autre et pourvus de garnitures étanches, et qu'on pousse ensuite entre deux tunnels un tunnel qui entame les deux garnitures de tunnel mises en place préalablement.

6. Procédé selon l'une des revendications 1 à 5, caractérisé en ce que les parois de deux garnitures de tunnel qui se recouvrent y compris les tuyaux internes sont entamés par une coupe traversante et qu'on insère dans la coupe une voie d'étanchéité dont les zones latérales sont reliées aux tuyaux internes.

7. Procédé selon la revendication 6, caractérisé en ce que la voie est insérée dans la fente parallèlement aux tuyaux.

8. Procédé selon la revendication 7, caractérisé en ce que la voie est insérée par tronçons transversalement dans la fente et que les tronçons sont reliés les uns aux autres à leurs bords.

9. Procédé selon l'une des revendications 1 à 8, caractérisé en ce que les tuyaux sont reliés par des tuyaux radiaux ou des lances filtrantes à la région de sol superposée.

10. Procédé selon l'une des revendications 1 à 9, caractérisé en ce que l'ensemble des tuyaux ou bien des tuyaux distincts sont remplis de matériaux d'étanchéité.

11. Procédé selon l'une des revendications 1 à 10, caractérisé en ce que l'on utilise comme tuyaux de support internes des tuyaux en acier, en acier revêtu de matière synthétique ou en matière synthétique HDPE.
